# EUROPEAN PATENT SPECIFICATION

(11) **EP 2 213 176 B1**
(45) Date of publication and mention of the grant of the patent: **17.04.2019**
(21) Application number: 10151729.0
(22) Date of filing: 27.01.2010
(51) Int. Cl.: A21C 3/06

(54) **Food Dough Extending Method and Apparatus**
Verfahren und Vorrichtung zum Teigausstrecken
Procédé et appareil pour étaler une pâte alimentaire

(30) Priority: 28.01.2009 JP 2009016377
(43) Date of publication of application: 04.08.2010
(73) Proprietor: RHEON AUTOMATIC MACHINERY CO., LTD., Utsunomiya-shi, Tochigi 320-0071 (JP)
(72) Inventor: Ueno, Sadao, Utsunomiya-shi Tochigi 320-0071 (JP); Kuwabara, Hitoshi, Utsunomiya-shi Tochigi 320-0071 (JP)
(74) Representative: Grünecker Patent- und Rechtsanwälte PartG mbB

(56) References cited:
- EP-A2- 1 285 581
- JP-A- 7 255 353
- NL-C2- 1 021 016

## Description

The present invention relates to a food dough extending method and apparatus for extending food dough formed in an approximately triangular shape beforehand, e.g., croissant dough before rolling up, into a larger triangular shape.

### [Background Art]

A conventional manufacturing of croissants, for example, includes cutting a dough strip into dough pieces with isosceles triangles by a cutting device while the dough strip being transported in a longitudinal direction thereof by a belt conveyor as a carrier, arranging the triangularly-cut dough pieces in such a given direction that the base sides of the triangular shapes may face downstream, and then rolling up the dough piece in the triangular shape from the base side toward the top of the triangular shape by a rolling-up device to be formed into a linear croissant.

In the above-described conventional method, the base and height dimensions of the croissant dough cut into a triangular shape are limited by the width dimension of the dough strip. Thus, it has been impossible to obtain a longer croissant in which the roll diameter at its both side portions is sharply decreased and thus is smaller than the roll diameter of its central portion (such croissant is a so-called Spanish croissant). To cope with this, there has been suggested a method for enlarging the dimension of the base of croissant dough cut into a triangular shape by forming and opening a slit in a central portion of the base (e.g., see Patent Literature 1).

### [Citation List]

### [Patent Literature]

[Patent Literature 1: NL1021016C2]

### [Technical Problem]

In the configuration described in the above-described Patent Literature 1, a slit is formed in a central portion of the base of croissant dough cut into a triangular shape, and then the slit is merely opened by sticking needles in the croissant dough in both side portions of the slit and moving the needles away from each other. Accordingly, though the dimension of the base of the croissant dough cut into a triangular shape can be made longer, when the slit is opened wider to further increase the length of the base, the croissant dough may be damaged in a region near the slit and regions in which the needles are stuck.

Further prior art is known from documents EP1285581A2 and JP7255353A.

### [Solution to Problem]

The present invention has been achieved with such points in mind.

It therefore is an object of the present invention to provide a food dough extending method and apparatus for extending food dough formed in an approximately triangular shape into a larger triangular shape before rolling up, thereby extending right-side and left-side portions of the food dough so as to be evenly extended in opposite directions from near the center of the base of the food dough, and thereby extending an unextended portion toward the top of the food dough so as to be longer and larger.

The object is solved by claims 1 and 4.

### [Advantageous Effects of Invention]

According to the present invention, both side portions, which are right-side and left-side portions, can be evenly extended in opposite directions from near the center of the base of the food dough formed into an approximately triangular shape beforehand, and the length of the base of the triangular shape can be made longer than heretofore. Moreover, by extending an unextended portion toward the top, the food dough in a triangular shape can be extended toward the top to be longer and larger. Thus, conventional problems such as described previously can be solved.

### [Brief Description of Drawings]

Fig. 1 is an explanatory plan view schematically, conceptually, and schematically showing the overall configuration of a system for rolling up croissant dough.
Fig. 2 is an explanatory side cross-sectional view schematically, conceptually, and schematically showing the overall configuration of the system for rolling up croissant dough.
Fig. 3 is an explanatory plan view of a first extender according to an embodiment of the present invention.
Fig. 4 is an explanatory front view of the first extender according to the embodiment of the present invention.
Fig. 5 is an explanatory left side view of the first extender according to the embodiment of the present invention.
Fig. 6 is an explanatory right side view of the first extender according to the embodiment of the present invention.
Figs. 7(a) to 7(d) are explanatory views conceptually, schematically, and schematically showing a extending method according to a second embodiment.

### [Description of Embodiments]

Hereinafter, an embodiment of the present invention will be described with reference to the drawings. First, for ease of understanding, a conceptual and schematic description will be made of the overall configuration of a system for rolling up croissant dough (food dough) cut into an approximately triangular shape beforehand.

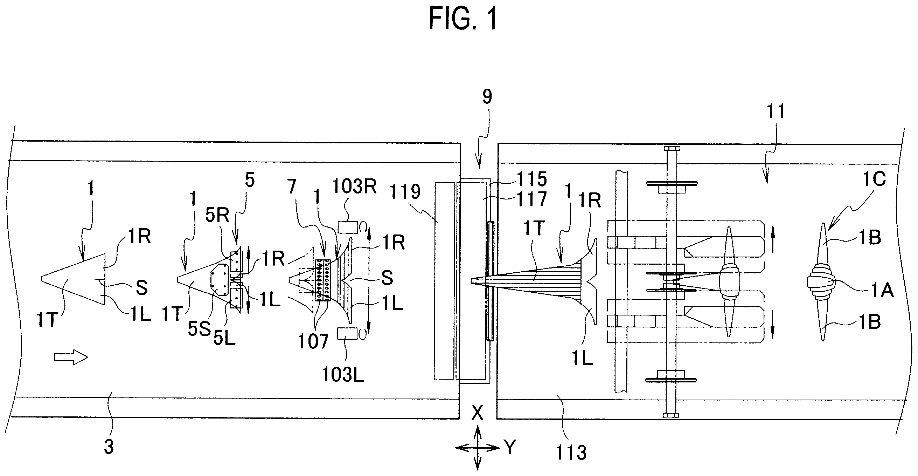

When croissants are manufactured, a relatively wide dough sheet is cut into several dough strips by a cutter in the middle of being transported downstream by a conveyor belt. Further, each of the dough strips is cut into isosceles triangles having opposite orientations alternately so that the height dimension of each triangle is the width dimension of the dough strip, and a slit is formed in a central portion of the base of each of the dough triangles. These dough triangles have orientations of 90 degrees from the transportation direction of the conveyor belt. Accordingly, the dough triangles are rotated 90 degrees by a turning device so that the food dough pieces are arranged in a given direction with the bases of the triangles facing downstream (see Fig. 1).

It should be noted that in Fig. 1 , a case is shown in which croissant dough 1 in triangular shapes before rolling up is transported in only one row by a conveyor belt 3, as one example of food dough in approximately triangular shapes.

Actually, the croissant dough (food dough) 1 is transported in several rows, e.g., four rows. However, for ease of understanding, an example of one row is shown. In a central portion of the base of the croissant dough 1 cut into a triangular shape, a slit S is formed. The slit S can be opened in lateral directions by pulling left and right portions on opposite sides of the slit S to the left and right (in a direction perpendicular to the transportation direction; in the vertical direction, the direction of the X axis, in Fig. 1).

A slit opener 5 is disposed over the conveyor belt 3 to slightly open the slit S of the croissant dough 1. The slit opener 5 has the function of slightly opening in the lateral directions the slit S of the croissant dough 1 being transported by the conveyor belt 3. The slit opener 5 includes a pair of needle holders 5L and 5R and a central needle holder 5S. The pair of needle holders 5L and 5R is one example of a pair of left and right dough holders. The central needle holder 5S is one example of a dough holder for holding the food dough 1 upstream from the needle holders 5L and 5R (to the left of the needle holders 5L and 5R in Fig. 1).

The pair of needle holders 5L and 5R can move toward and away from each other in the lateral directions, and can move up and down integrally with the central needle holder 5S.

Accordingly, the slit S of the food dough 1 can be opened in the lateral directions by moving the left and right needle holders 5L and 5R away from each other in the lateral directions in a state in which the pair of needle holders 5L and 5R and the needle holder SS are lowered to hold the food dough 1.

It should be noted that the configuration for opening a slit of croissant dough in the Patent Literature 1 can also be employed as the configuration of the slit opener 5.

Downstream from the slit opener 5, a first extender 7 is provided to extend left and right portions (a left-side portion and a right-side portion) 1L and 1R on opposite sides of the slit S opened by the slit opener 5 so that the left and right portions 1L and 1R may be lengthened outward to the left and right (it should be noted that the extender 7 is schematically shown in Fig. 1). This first extender 7 has the function of extending the left and right portions 1L and 1R on opposite sides of the slit S outward to the left and right, and therefore can be referred to as a lateral extender.

Downstream from the first extender (lateral extender) 7, a second extender 9 is provided to extend a top-side portion (unextended portion) of the croissant dough 1 in a triangular shape long toward the top from the portion extended outward to the left and right by the first extender 7. This second extender 9 is intended to extend the top-side portion (unextended portion) of the croissant dough 1 in a triangular shape, and therefore can be referred to as a top-side extender.

Further, downstream from the second extender (top-side extender) 9, a rolling-up device 11 is provided to roll up the croissant dough 1 extended into a larger triangular shape from the base side toward the top. This rolling-up device 11 may have a publicly known configuration such as described in the aforementioned Patent Literature 1 or, for example, Japanese Patent Application Laid-Open No. Hei 7-255353 . Accordingly, configuration and functions of the rolling-up device 11 will not be described in detail.

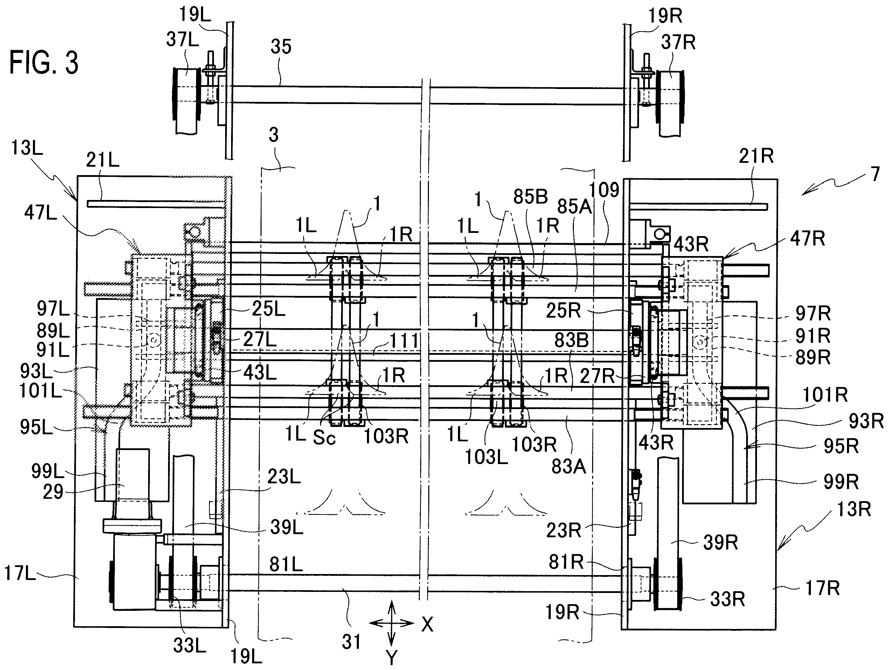

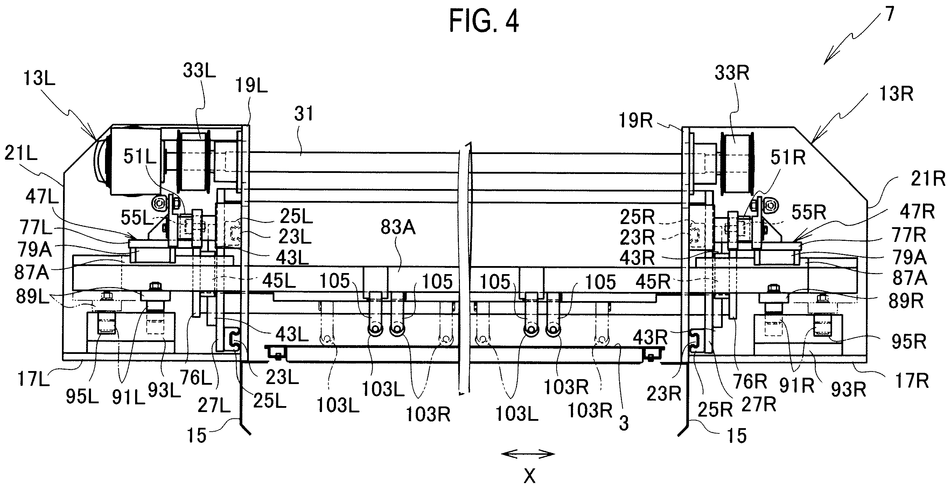

Next, the configuration of the first extender 7 will be described. As conceptually and schematically shown in Figs. 3 and 4 , the first extender (lateral extender) 7 includes left and right stand frames 13L and 13R on opposite sides of the conveyor belt 3 with respect to the width direction thereof. The stand frames 13L and 13R are mounted on a base frame 15 (not shown in detail) equipped with the conveyor belt 3. The stand frames 13L and 13R include horizontal base plates 17L and 17R which are long in the back-and-forth direction (direction of the Y axis), and integrally includes vertical support plates 19L and 19R provided to stand upright inward of the base plates 17L and 17R and to face each other. The base plates 17L and 17R and the support plates 19L and 19R are reinforced by rib plates 21L and 21R to be maintained perpendicular to each other.

The support plates 19L and 19R of the left and right stand frames 13L and 13R are equipped with horizontal guide members 23L and 23R parallel to the running direction of the conveyor belt 3, i.e., the transportation direction of the croissant dough 1 (vertical direction in Fig. 3 , the direction perpendicular to the drawing plane in Fig. 4). Left and right slide plates 27L and 27R are supported by the left and right guide members 23L and 23R, with sliders 25L and 25R interposed therebetween to be movable back and forth.

To move the slide plates 27L and 27R along the left and right guide members 23L and 23R back and forth in the transportation direction (back-and-forth direction, Y direction) of the croissant dough 1, left and right end portions of a horizontal drive shaft 31 which is rotated by a drive motor 29 (see Fig. 3) attached to the support plate 19L is rotatably supported at one end portions (downstream portions) of upper portions of the left and right support plates 19L and 19R. Further, left and right drive pulleys 33L and 33R are integrally attached to the two end portions of the drive shaft 31.

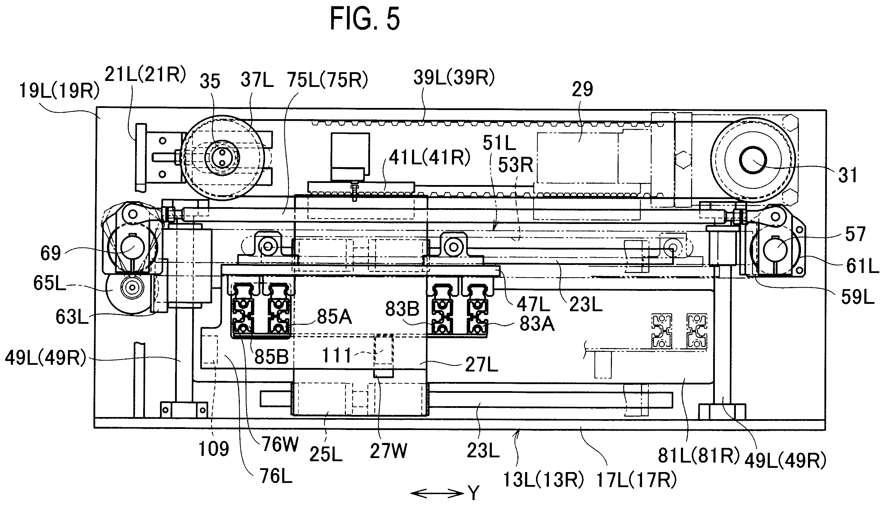

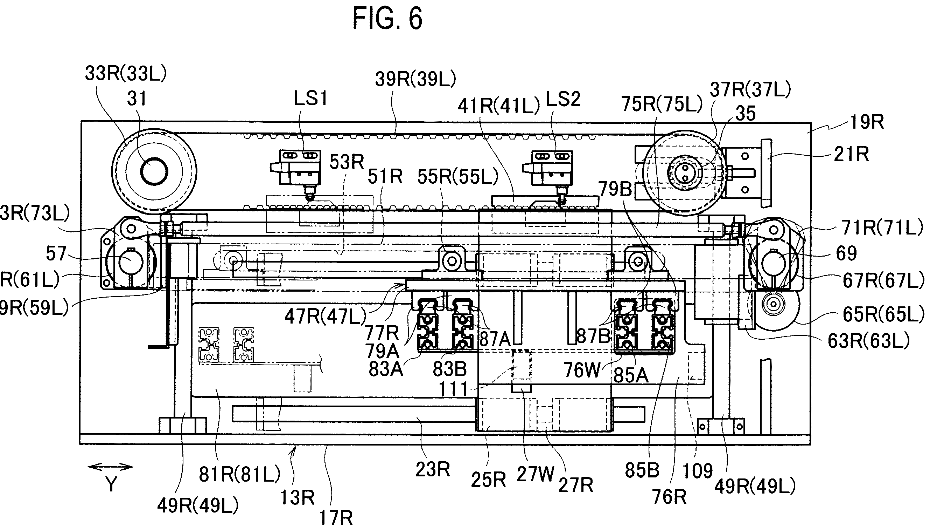

At other end portions (upstream portions) of upper portions of the left and right support plates 19L and 19R, left and right end portions of a driven shaft 35 are supported to be movable and adjustable in the transportation direction with respect to the support plates 19L and 19R. To the two end portions of the driven shaft 35, left and right driven pulleys 37L and 37R are rotatably attached. It should be noted that in Fig. 3 , for ease of understanding, only a portion of the driven shaft 35 is displayed with the position thereof shifted. Further, left and right endless members 39L and 39R such as timing belts are looped over the left and right drive pulleys 33L and 33R and the left and right driven pulleys 37L and 37R. The left and right endless members 39L and 39R are integrally connected to the left and right slide plates 27L and 27R with connecting members 41L and 41R (see Figs. 5 and 6).

Accordingly, when the drive motor 29 is rotated in forward or reverse, the left and right endless members 39L and 39R are synchronously rotated in forward or reverse, and the left and right slide plates 27L and 27R synchronously move forward or backward (in the Y direction).

The left and right slide plates 27L and 27R are equipped with vertical guide members 43L and 43R (see Fig. 4), respectively. To the left and right guide members 43L and 43R, left and right lifting frames 47L and 47R are attached to be movable vertically with sliders 45L and 45R interposed therebetween. Vertical guide members 49L and 49R are respectively provided on both the front and rear sides (both the left and right sides in Figs. 5 and 6) of the left and right support plates 19L and 19R to move the left and right lifting frames 47L and 47R vertically. Two end portions of left and right lifting beams 51L and 51R which are long in the back-and-forth direction (Y direction) are supported by the guide members 49L and 49R to be movable vertically.

Further, guided members 55L and 55R (see Fig. 6) such as guide pins or guide rollers provided in upper portions of the left and right lifting frames 47L and 47R are engaged with the insides of guide holes 53L and 53R respectively formed in the left and right lifting beams 51L and 51R along the back-and-forth direction, such that the guided members 55L and 55R are movable in the back-and-forth direction. Accordingly, the left and right lifting frames 47L and 47R are movable backward and forward integrally with the left and right slide plates 27L and 27R, and are movable vertically integrally with the left and right lifting beams 51L and 51R.

To move the lifting beams 51 L and 51 R vertically along the left and right guide members 49L and 49R, left and right end portions of a pivot rod 57, which is turned back and forth by a back-and-forth turning device (not shown), e.g., a motor, a fluid-pressure cylinder, or the like, are turnably supported on the left and right support plates 19L and 19R. Further, to left and right end portions of this pivot rod 57, pinions 61L and 61R are integrally attached which mesh with vertical racks 59L and 59R provided at front end portions of the left and right lifting beams 51L and 51R.

Moreover, vertical racks 63L and 63R are attached to rear end portions of the left and right lifting beams 51L and 51R, respectively. Pinions 65L and 65R rotatably provided on the left and right support plates 19L and 19R are meshed with the left and right racks 63L and 63R, respectively. To synchronously turn the front and rear pinions 61L and 61R; and 65L and 65R in opposite directions, intermediate pinions 67L and 67R meshing with the pinions 65L and 65R are turnably supported on the left and right support plates 19L and 19R through an intermediate shaft 69. Levers 71L and 71R are integrally provided on the intermediate shaft 69 at two end portions of the intermediate shaft 69. Further, other levers 73L and 73R which respectively have the same length as levers 71L and 71R are integrally provided on the pivot rod 57 at two end portions of the pivot rod 57. Front and rear end portions of left and right connecting rods 75L and 75R which are long in the back-and-forth direction are pivotally connected to the levers 71L and 71R; and 73L and 73R through pivots, respectively.

Thus, the turning motion of the pivot rod 57 is transmitted to the intermediate pinions 67L and 67R through the levers 73L and 73R, the connecting rods 75L and 75R, the levers 71L and 71R, and the intermediate shaft 69, and transmitted to the pinions 65L and 65R through the intermediate pinions 67L and 67R. Accordingly, the pinions 61L and 61R provided on the pivot rod 57 and the pinions 65L and 65R synchronously turn in opposite directions, and the left and right lifting beams 51 L and 51 R are synchronously moved vertically through the front and rear racks 59L and 59R; and 63L and 63R.

As shown in Fig. 4 , the left and right lifting frames 47L and 47R include vertical lifting plates 76L and 76R, and horizontal support brackets 77L and 77R. The vertical lifting plates 76L and 76R are equipped with the sliders 45L and 45R which move vertically along the guide members - 43L and 43R provided on the left and right slide plates 27L and 27R. The horizontal support brackets 77L and 77R horizontally protrude from upper portions of the lifting plates 76L and 76R in the lateral direction (X direction). As shown in Fig. 6 , front and rear pairs of sliders 79A and 79A; and 79B and 79B are provided under lower surfaces of front and rear portions of the left and right support brackets 77L and 77R, respectively.

Under the sliders 79A and 79A; and 79B and 79B, left and right end portions of roller support beams 83A and 83B; and 85A and 85B (see Fig. 3) are supported to be movable in the lateral direction (X direction) with guide members 87A and 87B interposed therebetween. The roller support beams 83A and 83B; and 85A and 85B pass in the lateral direction through large holes 81L and 81R which are formed in the left and right support plates 19L and 19R to be large in the vertical direction and the back-and-forth direction. It should be noted that the paired rear-side (upstream) roller support beams 85A and 85B pass in the lateral direction (X direction) through windows 76W formed in the lifting plates 76L and 76R of the lifting frames 47L and 47R.

As to the front and rear roller support beams 83A and 83B; and 85A and 85B, the roller support beam 83A which is the downstream one of the roller support beams 83A and 83B paired on the downstream side (front side) as seen in the transportation direction of the conveyor belt 3, and the roller support beam 85A which is the downstream one of the roller support beams 85A and 85B paired on the upstream side (rear side), are integrally connected to each other. Further, the roller support beams 83B and 85B which are the upstream ones are also integrally connected with each other.

More specifically, the lower surfaces of right end portions of the front roller support beams 83A and 85A are integrally connected to front and rear end portions of a connecting member 89R which is long in the back-and-forth direction, and the lower surfaces of left end portions of the rear roller support beams 83B and 85B are integrally connected to front and rear end portions of a connecting member 89L which is long in the back-and-forth direction. Further, to move the roller support beams 83A and 85A; and 83B and 85B in the lateral direction, cam followers 91L and 91R are provided under lower surfaces of the left and right connecting members 89L and 89R, respectively. These cam followers 91L and 91R are engaged with cam grooves 95L and 95R to be movable therein and movable vertically. The cam grooves 95L and 95R are provided in cam plates 93L and 93R provided on the upper surfaces of the base plates 17L and 17R of the left and right stand frames 13L and 13R.

The cam grooves 95L and 95R of the left and right cam plates 93L and 93R are formed in a bilaterally symmetrical shape as shown in Fig. 3 . Specifically, the cam grooves 95L and 95R include upstream cam grooves 97L and 97R and downstream cam grooves 99L and 99R parallel to the transportation direction as seen in the transportation direction of the conveyor belt 3. The cam groove 95L further includes a diagonal cam groove 101L which connects the upstream cam groove 97L with the downstream cam groove 99L. The cam groove 95R also includes a diagonal cam groove 101R which connects the upstream cam groove 97R with the downstream cam groove 99R. The distance dimension between the downstream cam grooves 99L and 99R is larger than the distance dimension between the left and right upstream cam grooves 97L and 97R. Accordingly, the distance dimension between the left and right diagonal cam grooves 101L and 101R is set such that the distance dimension gradually increases from the upstream side toward the downstream side.

Accordingly, when the left and right slide plates 27L and 27R gradually move from the upstream side toward the downstream side, the left and right lifting frames 47L and 47R also move in the same direction integrally, and the roller support beams 83A and 83B; and 85A and 85B supported on the left and right lifting frames 47L and 47R to be movable only in the lateral direction are also moved toward the downstream side integrally. When the roller support beams 83A and 83B; and 85A and 85B are moved toward the downstream side integrally with the lifting frames 47L and 47R as described above, the left and right connecting members 89L and 89R integral with the roller support beams 83B and 85B; and 83A and 85A also move toward the downstream side integrally.

Accordingly, the left and right cam followers 9 1 L and 91R provided on the left and right connecting members 89L and 89R move along the cam grooves 95L and 95R provided in the left and right cam plates 93L and 93R. The roller support beams 83A and 85A gradually move toward the right in Fig. 3 , and the roller support beams 83B and 85B gradually move toward the left. It should already be clear that when the left and right slide plates 27L and 27R move back and forth, the roller support beams 83A and 85A; and 83B and 85B synchronously move in opposite lateral directions.

In lower portions of the roller support beams 83A and 85A, an appropriate number of right-side extending rollers 103R are integrally provided with brackets 105 interposed therebetween. The right-side extending rollers 103R are intended to extend a right-side portion 1R, which corresponds to a base-side portion of the croissant dough 1 to the right of the slit S, outward toward the right. Further, in lower portions of the roller support beams 83B and 85B, an appropriate number of left-side extending rollers 103L are integrally provided with brackets 105 interposed therebetween. The left-side extending rollers 103L are intended to extend a left-side portion 1L, which corresponds to a base-side portion of the croissant dough 1 to the left of the slit S, outward toward the left.

The left and right extending rollers 103L and 103R provided on the roller support beams 83A and 83B, and the left and right extending rollers 103L and 103R provided on the roller support beams 85A and 85B, face each other in the lateral direction at the same positions as seen in the transportation direction (back-and-forth direction) of the conveyor belt 3. It should be noted that the left and right extending rollers 103L and 103R can press even corner portions SC (see Fig. 3) of the opened slit S of the croissant dough 1 at the positions where the left and right extending rollers 103L and 103R come closest to each other in the lateral direction.

In other words, the slit opener 5 needs only to open the slit S formed in the croissant dough 1 to a distance wide enough to allow the corner portions SC of the slit S to be pressed by the extending rollers 103L and 103R. Accordingly, since the slit opener 5 needs only to open the slit S formed in the croissant dough 1 wide enough to allow the corner portions SC to be pressed by the left and right extending rollers 103L and 103R, the croissant dough 1 are not damaged when the slit S is opened by the slit opener 5.

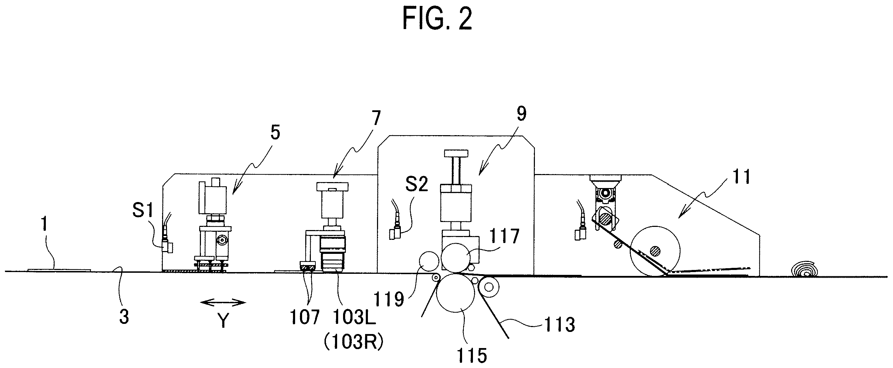

The lateral extender 7 includes pressure members 107 (see Fig. 1) for pressing the top side of the croissant dough 1 when the portions 1L and 1R of the croissant dough 1 on opposite sides of the slit S are extended outward in opposite directions by the left and right extending rollers 103L and 103R provided in the lateral extender 7. Specifically, to the lifting plates 76L and 76R of the left and right lifting frames 47L and 47R, left and right end portions of a connecting beam 109 (see Fig. 3) are respectively connected which pass through the large holes 81L and 81R of the support plates 19L and 19R upstream from (behind) the pair of rear-side roller support beams 85A and 85B. At the positions on the connecting beam 109 which correspond to the extending rollers 103L and 103R, the pressure members 107 (see Figs. 1 and 2) such as rollers or the like for pressing the croissant dough 1 are provided. It should be noted that Figs. 1 and 2 are diagrammatic views.

Moreover, upstream from (behind) the pair of front-side roller support beams 83A and 83B, a connecting beam 111 which is long in the lateral direction is disposed. At the positions on the connecting beam 111 which correspond to the extending rollers 103L and 103R, pressure members similar to the pressure members 107 are provided. It should be noted that left and right end portions of the connecting beam 111 pass through the large holes 81L and 81R of the left and right support plates 19L and 19R and windows 27W formed in the left and right slide plates 27L and 27R to be movable vertically, and are connected to the lifting plates 76L and 76R of the left and right lifting frames 47L and 47R, respectively.

Accordingly, when the left and right lifting frames 47L and 47R are lowered to extend the left and right opposite side portions 1L and 1R of the croissant dough 1 by the extending rollers 103L and 103R, the front and rear connecting beams 111 and 109 are also lowered at the same time. As a result, the croissant dough 1 is pressed by the pressure members 107 provided on the connecting beams 111 and 109. Accordingly, when the extending rollers 103L and 103R are moved in the lateral directions to extend the left and right opposite side portions 1L and 1R of the croissant dough 1 in the lateral directions, the croissant dough 1 is held at a fixed position by the pressure members 107.

The top-side extender (second extender) 9 is disposed between the conveyor belt 3 and a downstream transportation conveyor belt 113 as conceptually, schematically, and schematically shown in Figs. 1 and 2 . The top-side extender 9 extends an unextended portion of the croissant dough 1, i.e., the top-side portion 1T of the croissant dough 1 in a triangular shape, toward the top of the triangle after the lateral extender (first extender) 7 has extended the left and right opposite side portions 1L and 1R of the croissant dough 1 to the left and right.

The top-side extender 9 includes a lower roller 115 and an upper roller 117. The lower roller 115 is rotatable and supports the croissant dough 1 from below between the conveyor belt 3 and the transportation conveyor belt 113. The upper roller 117 can be adjusted vertically with respect to the lower roller 115, and is rotated by a motor (not shown). Upstream from the upper roller 117, a pressure roller 119 is rotatably provided which presses the croissant dough 1 transported by the conveyor belt 3 against the conveyor belt 3. This pressure roller 119 is provided to be vertically movable integrally with the upper roller 117.

The peripheral speed of the pressure roller 119 is set to be adjustable to a speed approximately equal to the transportation speed of the conveyor belt 3. Further, the peripheral speed of the lower roller 115 and the transportation speed of the transportation conveyer 113 are set to be adjustable to speeds faster than the transportation speed of the conveyor belt 3.

The top-side extender 9 is intended to extend the top-side portion 1T of the food dough (croissant dough) 1 longer toward the top. When the food dough 1 is transferred (transported) from the lateral extender 7, the pressure roller 119 and the upper roller 117 are in raised states and in waiting states. Further, when the opposite side portions 1L and 1R of the food dough 1 which have been extended outward to the left and right reach positions on the lower roller 115, the pressure roller 119 and the upper roller 117 are lowered to desired height positions to press the food dough 1.

Accordingly, the top-side portion 1T of the food dough 1 is brought to the state of being pressed against the conveyor belt 3 by the pressure roller 119, pressed between the upper roller 117 and the lower roller 115, and pulled by the transportation conveyer 3. Thus, the top-side portion 1T is extended long toward the top.

In the above-described configuration, when the croissant dough 1 which has been cut into an approximately triangular shape beforehand and which has the slit S formed in a central portion of the base thereof is transported downstream by the conveyor belt 3 with the base side facing downstream, the croissant dough 1 is detected by a detection sensor S1 (see Fig. 2) such as a proximity switch provided upstream from the slit opener 5. Further, after a predetermined time has elapsed from the detection by the detection sensor S1, when the croissant dough 1 is placed at a position under the slit opener 5, the needle holders 5L and 5R as a pair of left and right dough holders provided in the slit opener 5 are lowered and the central needle holder 5S is lowered under the control of a control unit (not shown) to stick needles in the croissant dough 1. After that, the left and right needle holding members 5L and 5R move in the lateral directions to open the slit S of the croissant dough 1 in the lateral directions. At this time, the central needle holder 5S holds an approximately central portion of the croissant dough (food dough) 1. Accordingly, the food dough 1 does not swing in the lateral directions, and held at a fixed position.

It should be noted that it is desirable to move the slit opener 5 in synchronization with the conveyor belt 3 when the slit S of the croissant dough 1 is opened in the lateral directions by the slit opener 5. The configuration of the slit opener 5 may be a configuration similar to the configuration described in the aforementioned Patent Literature 1, but may also be a configuration based on that of the aforementioned lateral extender 7. Specifically, a configuration may also be employed which includes support beams corresponding to the roller support beams 83A and 83B of the lateral extender 7, and in which the support beams are equipped with the needle holders 5L and 5R instead of the extending rollers 103L and 103R.

The croissant dough 1 having the slit S opened in the lateral directions by the slit opener 5 as described previously reaches a position corresponding to the lateral extender 7 after a predetermined time has elapsed. Further, when the croissant dough 1 reaches the position corresponding to the lateral extender 7, i.e., when the predetermined time has elapsed since the slit S has been opened, the drive motor 29 is rotated to move the left and right slide plates 27L and 27R downstream. When the movement of the slide plates 27L and 27R toward the downstream side and the transfer speed (transportation speed) of the food dough 1 by the conveyor belt 3 are synchronized to be an equal speed, the pivot rod 57 is rotated to lower the left and right lifting frames 47L and 47R as described previously. Thus, the front and rear roller support beams 83A and 83B; and 85A and 85B supported by the lifting frames 47L and 47R are lowered, and the front and rear connecting beams 109 and 111 are lowered.

When the front and rear roller support beams 83A and 83B; and 85A and 85B are lowered as described above, the left and right extending rollers 103L and 103R provided on the roller support beams 83A and 83B; and 85A and 85B press the croissant dough 1 against the conveyor belt 3 to be placed in the opened slit S of the croissant dough 1. Moreover, when the front and rear connecting beams 109 and 111 are lowered, the top sides of the croissant dough 1 in triangular shapes are pressed against the conveyor belt 3 by the pressure members 107 provided on each of the connecting beams 109 and 111.

When the left and right slide plates 27L and 27R are gradually moved downstream (toward the front) in a state in which the croissant dough 1 is pressed by the left and right extending rollers 103L and 103R as described previously, the cam follower 91R provided on the connecting member 89R connecting the right end portions of the roller support beams 83A and 85A and the cam follower 91L provided on the connecting member 89L connecting the left end portions of the roller support beams 83B and 85B gradually move downstream along the cam grooves 95R and 95L provided in the left and right cam plates 93R and 93L. Accordingly, the right-side extending rollers 103R provided on the roller support beams 83A and 85A gradually move toward the right, and the left-side extending rollers 103L provided on the roller support beams 83B and 85B gradually move toward the left.

Accordingly, the portions 1L and 1R of the croissant dough 1 to the left and right of the slit S are extended to the left and right, respectively. At this time, the croissant dough 1 is pressed against the conveyor belt 3 by the pressure members 107. Thus, the croissant dough 1 does not move in the lateral direction and constantly held in a stable state.

It should be noted that when the left and right opposite side portions 1L and 1R of the croissant dough (food dough) 1 are extended outward to the left and right as described above, the extended thicknesses of the left and right opposite side portions 1L and 1R can be adjusted by controlling the rotation of a motor for rotating the pivot rod 57 to control the lowered positions of the lifting frames 47L and 47R.

In other words, by adjusting the lowered positions of the lifting frames 47L and 47R, the thicknesses of both the left and right portions of the food dough 1 can be adjusted, and the extending condition of the left and right opposite side portions 1L and 1R in the lateral directions, i.e., the lateral length thereof after extending, can be adjusted.

Further, when a dog provided on the slide plates 27L and 27R comes close to a limit switch (sensor) LS1 (see Fig. 6) for detecting an overrun on the downstream side, the movement of the slide plates 27L and 27R toward the downstream side is stopped under the control of the control unit before the limit switch LS 1 is actuated, and the lifting frames 47L and 47R are raised to be returned to original positions at which the lifting frames 47L and 47R have been located immediately before a limit switch (sensor) LS2 for detecting an overrun on the upstream side is actuated by the dog.

It should be noted that the positions of the slide plates 27L and 27R with respect to the back-and-forth direction can be easily sensed by detecting the rotation of the drive motor 29 or the drive shaft 31 with detection means such as a rotary encoder, using positions for starting movement toward the front as reference positions.

When the croissant dough 1 extended to both the left and right by the lateral extender 7 is moved to the top-side extender 9 by the conveyor belt 3, the croissant dough 1 is detected by a detection sensor S2 provided in the top-side extender 9.

Further, when a predetermined time has elapsed since the detection sensor S2 has detected the croissant dough 1, the pressure roller 119 and the upper roller 117 which have been waiting at raised positions are lowered to preset desired height positions to press the top-side portions 1T of the croissant dough 1. Specifically, the top-side portions 1T which are unextended portions of the food dough 1 are brought to the state of being pressed between the upper roller 117 and the lower roller 115 while remaining pressed against the conveyor belt 3 by the pressure roller 119 and being pulled by the transportation conveyer 113, and are thus extended toward the top.

At this time, by adjusting the gap between the upper roller 117 and the lower roller 115, extended thickness can be adjusted, and length after extending toward the top can be adjusted.

The croissant dough 1 extended by the first and second extenders 7 and 9 as described above is brought in the rolling-up device 11. In this rolling-up device 11, as shown in Fig. 1 , a croissant 1C is obtained which has such a linear shape that the diameters of left and right side portions 1B are extremely smaller than the diameter of a central portion 1A, and that the lateral length dimensions of the left and right side portions 1B are longer than the lateral length dimension of the central portion 1A.

The above description has been made to the effect that lateral extending is performed by the left and right extending rollers 103L and 103R provided on the front and rear roller support beams 83A and 83B; and 85A and 85B. In other words, the description has been made of the case where the extending rollers 103L and 103R are arranged in two rows in the back-and-forth direction. However, the extending rollers 103L and 103R may be arranged in one row in the back-and-forth direction as schematically shown in Figs. 1 and 2 .

For the sake of synchronizing the transportation speed of the conveyor belt 3 and the travel speeds of the extending rollers 103L and 103R and the like in the transportation direction, it is desirable to employ a configuration in which the extending rollers 103L and 103R are arranged in several rows in the back-and-forth direction and in which several rows of the croissant dough 1 arranged in the back-and-forth direction are extended in the lateral directions at the same time. Specifically, in the configuration in which several rows of the croissant dough 1 arranged in the back-and-forth direction are extended at the same time, the travel distances of the left and right slide plates 27L and 27R in the back-and-forth direction can be lengthened, and the transportation speed of the conveyor belt 3 and the travel speeds of the slide plates 27L and 27R in the same direction can be easily synchronized.

Instead, a configuration may also be employed in which the second extender 9 is omitted in the above-described configuration, and in which only the left and right portions 1L and 1R of the croissant dough 1 on opposite sides of the slit S are extended in the lateral directions.

The present invention is not limited to the above-described embodiment, and can also be carried out in other aspects by making appropriate modifications.

Specifically, in the above-described embodiment, an explanation has been made to the effect that the food dough 1 is detected by the detection sensors S1 and S2. However, the traveled position of the food dough 1 put on a reference position on the conveyor belt 3 can also be found by detecting the rotation of the conveyor belt 3 with a rotary encoder or the like, counting pulses of the rotary encoder with a counter, and performing a calculation based on the count. In this case, the detection sensors S1 and S2 can be omitted.

Moreover, the case where food dough is croissant dough has been described as an example in the aforementioned embodiment. However, the present invention can be applied not only to croissant dough but also to other food dough.

In this regard, food dough in a triangular shape needs only to have an approximately triangular shape. For example, a trapezoidal shape formed by cutting a top portion of a triangular shape is also included in approximately triangular shapes. In other words, food dough in a shape having a width dimension of a top portion smaller than the width dimension of a base portion with which the rolling up of the food dough is started has an approximately triangular shape.

Moreover, in the aforementioned embodiment, as an example, the case has been described in which the slit S is formed in a central portion of the base of the food dough 1 in a triangular shape, and in which both the left and right portions of the food dough 1 are extended outward to the left and right by the left and right extending rollers 103L and 103R. However, both left and right side portions of a base portion of the food dough 1 can also be extended in the lateral directions by one extending roller.

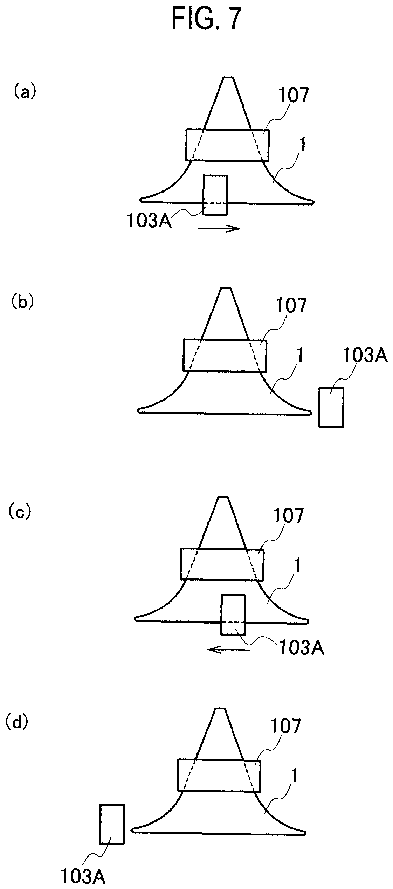

Specifically, in a state in which the food dough 1 in an approximately triangular shape is pressed by the pressure member 107 as schematically shown in Figs. 7(a) to 7(d), a right-side portion of the base of the food dough 1 is extended outward to the right by placing a extending roller 103A on one side of the food dough 1 which is to the left or right of a central portion of the food dough 1 as shown in Fig. 7(a), and moving the extending roller 103A to the other side as shown in Fig. 7(b) . Next, as shown in Figs. 7(c) and 7(d), a left-side portion of the food dough can also be extended outward to the left by moving the extending roller 103A from near the central portion toward the left. After that, an unextended portion of the food dough 1 is extended toward the top by the top-side extender 9.

In this case, there are time differences between extending operations in three directions. Accordingly, the concentration of tensile stress near the central portion of the food dough 1 can be avoided, and great shrinkage can be suppressed.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

### [Reference Signs List]

1 : FOOD DOUGH (CROISSANT DOUGH)
1L, 1R : LEFT AND RIGHT-SIDE PORTIONS (LEFT AND RIGHT PORTIONS)
1T : TOP-SIDE PORTION
3 : CONVEYOR BELT
5 : SLIT OPENER
7 : FIRST EXTENDER (LATERAL EXTENDER)
9 : SECOND EXTENDER (TOP-SIDE EXTENDER)
11 : ROLLING-UP DEVICE
17L, 17R : BASE PLATE
19L, 19R : SUPPORT PLATE
27L, 27R : SLIDE PLATE
31 : DRIVE SHAFT
33L, 33R : DRIVE PULLEY
35 : DRIVEN SHAFT
37L, 37R : DRIVEN PULLEY
39L, 39R : ENDLESS MEMBER
41L, 41R, 89L, 89R : CONNECTING MEMBER
47L, 47R : LIFTING FRAME
51 L, 51 R : LIFTING BEAM
53L, 53R : GUIDE HOLE
59L, 59R, 63L, 63R : RACK
61L, 61R, 65L, 65R : PINION
71L, 71R, 73L, 73R : LEVER
75L, 75R : CONNECTING ROD
76L, 76R : LIFTING PLATE
76W: WINDOW
81L, 81R: LARGE HOLE
83A, 83B, 85A, 85B : ROLLER SUPPORT BEAM
91L, 91R : CAM FOLLOWER
93L, 93R : CAM PLATE
95L, 95R : CAM GROOVE
103L, 103R : EXTENDING ROLLER
107 : PRESSURE MEMBER
109, 111 : CONNECTING BEAM
115 : LOWER ROLLER
117 : UPPER ROLLER
119 : PRESSURE ROLLER

## Claims

1. A food dough extending apparatus for extending food dough (1) formed in an approximately triangular shape beforehand into a larger triangular shape, comprising:
a slit opener (5) comprising a pair of dough holders (5R, 5L) configured to be movable away from each other while holding the food dough (1) at both side portions of a slit (S) formed in a central portion of a base of the food dough (1);
**characterized by**
a first extender (7) comprising either a pair of extending rollers (103R, 103L) configured to extend the food dough (1) at a right-side portion (1R) of a vicinity of the central portion of the base of the food dough (1), outward to the right, and
to extend the food dough (1) at a left-side portion (1L) of a vicinity of the central portion of the base of the food dough (1), outward to the left, or a single extending roller (103A) configured to extend the food dough at both the right-side and left-side portions (1R, 1L), and
a second extender (9) configured to extend an unextended portion of the food dough (1) toward a top of the food dough (1).

2. The food dough extending apparatus according to claim 1, **characterized by** the first extender (7) comprises a pressure member (107) configured to press a top side of the food dough in the triangular shape.

3. The food dough extending apparatus according to any one of claims 1 or 2, **characterized by** comprising two rows of the first extenders (7, 7) arranged in a transportation direction of the food dough (1).

4. A food dough extending method for extending a food dough (1) formed in an approximately triangular shape beforehand into a larger triangular shape by using the food dough extending apparatus according to claim 1, comprising the steps of:
cutting a slit (S) into a central portion of a base of the food dough;
opening the slit (S) formed in the central portion of the base of the food dough (1);
**characterized by**
extending base-side portions (1L, 1R) on both sides of the opened slit (S) outward in opposite directions; and
extending an unextended portion, located from a vicinity of the base at the base-side portions (1L, 1R) to a top-side portion (1T) of the food dough (1), toward the top of the food dough (1).

5. The food dough extending method for extending food dough (1) according to claim 4, **characterized by**
extending the food dough (1) at a right-side portion (1R) of the right of a vicinity of the central portion of the base of the food dough (1), outward to the right;
extending the food dough (1) at a left-side portion (1L) of the left of a vicinity of the central portion of the base of the food dough (1), outward to the left; and
extending an unextended portion of the food dough (1) in an approximately triangular shape toward a top of the food dough (1).

## Patentansprüche

1. Teigausstreckungsvorrichtung zum Strecken von Teig (1), der anfänglich in einer näherungsweise dreieckigen Form vorliegt, in eine größere dreieckige Form, mit:
einem Schlitzöffner (5), der ein Paar aus Teighaltern (5R, 5L) aufweist, die so ausgebildet sind, dass sie voneinander wegbewegbar sind, während der Teig (1) an beiden Seitenbereichen eines Schlitzes (S) gehalten werden, der in einem zentralen Bereich einer Grundfläche des Teigs (1) gebildet ist;
**gekennzeichnet durch**
eine erste Ausstreckungseinheit (7) mit entweder einem Paar aus Ausstreckungswalzen (103R, 103L), die ausgebildet sind, den Teig (1) an einem rechtsseitigen Bereich (1R) in der Nähe des zentralen Bereichs der Grundfläche des Teigs (1) auswärts nach rechts zu strecken, und den Teig (1) an einem linksseitigen Bereich (1L) in der Nähe des zentralen Bereichs der Grundfläche des Teigs (1) auswärts nach links zu strecken, oder eine einzige Ausstreckungswalze (103A) aufweist, die ausgebildet ist, den Teig sowohl an dem rechtsseitigen Bereich als auch an dem linksseitigen Bereich (1R, 1L) zu strecken, und
einer zweiten Ausstreckungseinheit (9), die ausgebildet ist, einen nicht gestreckten Bereich des Teigs (1) in Richtung zu einer Oberseite des Teigs (1) zu strecken.

2. Teigausstreckungsvorrichtung nach Anspruch 1, **dadurch gekennzeichnet, dass** die erste Ausstreckungseinheit (7) ein Druckelement (107) aufweist, das ausgebildet ist, eine Oberseite des Teigs in die dreieckige Form zu pressen.

3. Teigausstreckungsvorrichtung nach Anspruch 1 oder 2, **dadurch gekennzeichnet, dass** die Vorrichtung zwei Reihen aus den ersten Ausstreckungseinheiten (7, 7) aufweist, die in einer Transportrichtung des Teigs (1) angeordnet sind.

4. Teigstreckverfahren zum Strecken eines Teigs (1), der anfänglich in einer näherungsweise dreieckigen Form vorliegt, in eine größere dreieckige Form unter Verwendung der Teigausstreckungsvorrichtung nach Anspruch 1, mit den Schritten:
Schneiden eines Schlitzes (S) in einen zentralen Bereich einer Grundfläche des Teigs;
Öffnen des Schlitzes (S), der in dem zentralen Bereich der Grundfläche des Teigs (1) ausgebildet ist;
**gekennzeichnet durch**
Strecken von grundflächenseitigen Bereichen (1L, 1R) auf beiden Seiten des geöffneten Schlitzes (S) in entgegengesetzten Richtungen nach außen; und
Strecken eines ungestreckten Bereichs, der von der Nähe der Grundfläche der grundflächenseitigen Bereiche (1L, 1R) zu einem Oberseitenbereich (1T) des Teigs (1) reicht, in Richtung zu der Oberseite des Teigs (1).

5. Teigstreckverfahren zum Strecken von Teig (1) nach Anspruch 4, **gekennzeichnet durch**
Strecken des Teigs (1) auf einem rechtsseitigen Bereich (1R) auf der rechten Seite in der Nähe des zentralen Bereichs der Grundlage des Teigs (1) auswärts nach rechts;
Strecken des Teigs (1) an einem linksseitigen Bereich (1L) auf der linken Seite in der Nähe des zentralen Bereichs der Grundfläche des Teigs (1) auswärts nach links; und
Strecken eines nicht gestreckten Bereichs des Teigs (1) in einer nahezu dreieckigen Form in Richtung zu einer Oberseite des Teigs (1).

## Revendications

1. Appareil d'abaissement de pâte alimentaire pour l'abaissement de la pâte alimentaire (1) mise sous une forme approximativement triangulaire au préalable en une forme triangulaire plus grande, comprenant : un dispositif d'ouverture à fente (5) comprenant une paire de supports de pâte (5R, 5L) configurés pour être mobiles à l'opposé l'un de l'autre tout en maintenant la pâte alimentaire (1) aux deux parties latérales d'une fente (S) formée dans une partie centrale d'une base de la pâte alimentaire (1) ;
**caractérisé en ce que**
un premier dispositif d'abaissement (7) comprend soit une paire de rouleaux d'abaissement (103R, 103L) configurée pour abaisser la pâte alimentaire (1) à une partie côté droit (1R) d'une proximité de la partie centrale de la base de la pâte alimentaire (1), de l'extérieur vers la droite, et
pour abaisser la pâte alimentaire (1) au niveau d'une partie côté gauche (1L) d'une proximité de la partie centrale de la base de la pâte alimentaire (1), de l'extérieur vers la gauche, soit un rouleau d'abaissement unique (103A) configuré pour abaisser la pâte alimentaire au niveau à la fois des parties côté droit et côté gauche (1R, 1L), et
un second dispositif d'abaissement (9) configuré pour abaisser une partie non abaissée de la pâte alimentaire (1) vers une partie supérieure de la pâte alimentaire (1).

2. Appareil d'abaissement de pâte alimentaire selon la revendication 1, **caractérisé en ce que** le premier dispositif d'abaissement (7) comprend un élément de compression (107) configuré pour comprimer une face supérieure de la pâte alimentaire sous la forme triangulaire.

3. Appareil d'abaissement de pâte alimentaire selon l'une quelconque des revendications 1 ou 2, **caractérisé en ce qu'**il comprend deux rangées de premiers dispositifs d'abaissement (7, 7) disposées dans un sens de transport de la pâte alimentaire (1).

4. Procédé d'abaissement de pâte alimentaire pour l'abaissement d'une pâte alimentaire (1) d'une forme approximativement triangulaire au préalable en une forme triangulaire plus grande en utilisant l'appareil d'abaissement de pâte alimentaire selon la revendication 1, comprenant les étapes de :
découpe d'une fente (S) dans une partie centrale d'une base de la pâte alimentaire ;
ouverture de la fente (S) formée dans la partie centrale de la base de la pâte alimentaire (1) ;
**caractérisé en ce que**
les parties côté base d'abaissement (1L, 1R) sur les deux côtés de la fente ouverte (S) de l'extérieur dans les sens opposés ; et
l'abaissement d'une partie non abaissée, localisée à proximité de la base au niveau des parties côté base (1L, 1R) vers une partie de face supérieure (1T) de la pâte alimentaire (1), vers la partie supérieure de la pâte alimentaire (1).

5. Procédé d'abaissement de pâte alimentaire pour abaisser une pâte alimentaire (1) selon la revendication 4, **caractérisé par**
l'abaissement de la pâte alimentaire (1) au niveau d'une partie côté droit (1R) de la droite à proximité de la partie centrale de la base de la pâte alimentaire (1), de l'extérieur vers la droite ;
l'abaissement de la pâte alimentaire (1) au niveau d'une partie côté gauche (1L) de la gauche à proximité de la partie centrale de la base de la pâte alimentaire (1), de l'extérieur vers la gauche ; et
l'abaissement d'une partie non abaissée de la pâte alimentaire (1) en une forme approximativement triangulaire vers une partie supérieure de la pâte alimentaire (1).
